# EUROPÄISCHE PATENTSCHRIFT

(11) **EP 2 178 748 B1**
(45) Veröffentlichungstag und Bekanntmachung des Hinweises auf die Patenterteilung: **08.05.2013**
(21) Anmeldenummer: 08785397.4
(22) Anmeldetag: 06.08.2008
(51) Int. Cl.: B64C 9/16, B64C 9/28

(54) **HOCHAUFTRIEBSSYSTEM FÜR EIN FLUGZEUG**
HIGH LIFT SYSTEM FOR AN AIRCRAFT
SYSTÈME HYPERSUSTENTATEUR POUR UN AÉRONEF

(30) Priorität: 06.08.2007 DE 102007036996; 07.08.2007 US 954325 P
(43) Veröffentlichungstag der Anmeldung: 28.04.2010
(73) Patentinhaber: Airbus Operations GmbH, 21129 Hamburg (DE)
(72) Erfinder: VOSS, Timo, 20357 Hamburg (DE); LOERKE, Joachim, 21629 Hamburg (DE)
(74) Vertreter: Schatt, Markus F.
(86) Internationale Anmeldenummer: PCT/EP2008/006484
(87) Internationale Veröffentlichungsnummer: WO 2009/019011

(56) Entgegenhaltungen:
- EP-A- 0 075 966
- WO-A-84/01343
- GB-A- 2 038 737

## Beschreibung

Die Erfindung betrifft ein verfahren zur Änderung der Wölbung gemäβ Anspruch 1.

Hochauftriebssysteme für Flugzeuge umfassen am Tragflügel des Flugzeugs angeordnete Hochauftriebsklappen, welche durch einen Stellantrieb zwischen einer eingefahrenen Stellung, in welcher die Klappe das Flügelprofil im Wesentlichen spaltfrei kontinuierlich ergänzt, und mehreren ausgefahrenen Stellungen, in welchen sich ein Spalt gegebener Breite zwischen Flügel und Klappe bildet und die Klappe in einem vorgegebenen Winkel gegen das Flügelprofil angestellt ist, verstellbar sind. Das Ausfahren der Klappe erfolgt ganz allgemein in einer Bewegung, welche einerseits eine verlagerung der Klappe gegenüber dem Flügel nach hinten und damit eine Verlängerung des wirksamen Flügelprofils und andererseits eine Erhöhung des Anstellwinkels der Klappe mit Vergrößerung der Profilwölbung und damit einhergehender Erhöhung des aerodynamischen Auftriebs umfasst. Durch den sich zwischen Klappe und Flügel bei der Ausfahrbewegung bildenden Spalt strömt unter hoher Geschwindigkeit Luft von der Unterseite des Flügels zur Oberseite der Klappe, was einen weiteren Beitrag zur Auftriebserhöhung leistet.

Unter den heute am meisten verbreiteten Arten von Hochauftriebssystemen besonders zu erwähnen ist einerseits die sogenannte Fowler-Klappe. Bei dieser erfolgt während des Ausfahrens der Klappe eine Bewegung derselben nach rückwärts weg vom Flügel unter Bildung des besagten Spalts zwischen Flügel und Klappe, wobei dieser Bewegung, insbesondere bei zunehmenden Ausfahren der Klappe, eine Vergrößerung des Anstellwinkels derselben überlagert ist. Diese kombinierte Bewegung wird auch als Fowler-Bewegung bezeichnet.

Auf der anderen Seite ist eine als Dropped Hinge-Kinematik oder Schwenkklappen-Kinematik bezeichnete Anordnung bekannt, bei welcher die Hochauftriebsklappe an einem Klappenhebel um einen unter dem Flügel vorgesehenen Drehpunkt schwenkbar gelagert ist. Wie schon der Name sagt, wird die Klappe beim Ausfahren um den unter dem Flügel befindlichen Drehpunkt bewegt, auf einer Bahn, die die Form eines Kreisbogens hat.

Beide beschriebenen Verbindungen zwischen Flap und Hauptflügel sowie die beschriebenen Antriebseinheiten ermöglichen ein Verfahren der Flap von einem eingefahrenen Zustand in mehrere Zwischenpositionen mit mittleren Verfahrwegen und Rotationswinkeln sowie in einen vollständig ausgefahrenen Zustand.

Aus derGB2038737, der US 4 725 026, der US 4 784 355 und der US 6 601 801 sind verschiedene Hochauftriebssysteme bekannt. Auβerdem ist aus der EP0075966 ein Aileron-System offenbart, mit dem Wölbung des Flügels an das Geschwindigkeits-Spektrum des Flugzeugs angepasst wird.

Die Aufgabe der Erfindung ist es, ein verfahren zur Änderung eines Hochauftriebssystem zu schaffen, welches dieses an die Flugzeug-seitigen Anforderungen anpasst. ist

Diese Aufgabe wird durch ein Verfahren mit den Merkmalen des Anspruchs 1 gelöst.

Eine vorteilhafte Ausführungsform und Weiterbildung ist im Unteranspruch 2 angegeben.

Die Einstellbarkeit beruht auf der Verwendung eines Trägerteils, welches mittels einer Lagervorrichtung am Hauptflügel angeordnet ist, wobei diese eine Einstell-Vorrichtung aufweist, mit der die Orientierung des Trägerteils einstellbar ist.

Das Hochauftriebssystem weist auf: einen Hauptflügel, eine am Hauptflügel des Flugzeugs angeordnete und gegenüber dem Hauptflügel mittels Klappen-Betätigungsorganen und einer Antriebsvorrichtung zwischen einer eingefahrenen Stellung und mehreren ausgefahrenen Stellungen verstellbare Klappe und ein am Hauptflügel angeordnetes Trägerteil, an die die Klappen-Betätigungsorgane gekoppelt sind und gegenüber dem die Klappen-Betätigungsorgane zur Verstellung der Klappe bewegbar sind. Das Trägerteil ist mittels einer Lagervorrichtung am Hauptflügel angeordnet, die eine Einstell-Vorrichtung aufweist, mit der die Orientierung des Trägerteils relativ zur Orientierung des Hauptflügels einstellbar ist.

Die Einstell-Vorrichtung weist zumindest eine erste Einstell-Vorrichtung und eine zweite Einstell-Vorrichtung auf, wobei die erste Einstell-Vorrichtung gegenüber der zweiten Einstell-Vorrichtung stromaufwärts gelegen ist und wobei zumindest eine der Einstell-Vorrichtungen eine Abstands-Einstellvorrichtung aufweist, mit der der Abstand der oberen Seite des Trägerteils an der Abstands-Einstellvorrichtung von der Flügelsehne des Hauptflügels einstellbar ist.

Die erste Einstell-Vorrichtung weist ein Gelenk zur gelenkigen Verbindung des Hauptflügels und des Trägerteils auf, und die zweite Einstell-Vorrichtung weist eine Abstands-Einstellvorrichtung auf.

Dabei kann die Abstands-Einstellvorrichtung eine Schraubenverbindung mit einer Trägerteil-seitigen Aufnahmevorrichtung und einer Hauptflügel-seitigen Aufnahmevorrichtung, einem Verbindungselement zum Verbinden der Aufnahmevorrichtungen, sowie einem Distanzstück aufweisen.

Die erste Einstell-Vorrichtung kann generell stromauf der zweiten Einstell-Vorrichtung gelegen sein. Die erste Einstell-Vorrichtung kann insbesondere als gelenkige Bolzenverbindung mit einem flügelseitigen Zapfen, der fest mit dem Hauptflügel verbunden ist, einer Aufnahme-Vorrichtung am Trägerteil und einer die Aufnahme-Vorrichtung und den Zapfen gelenkig verbindenden Achse gestaltet sein.

Bei diesen Ausführungsformen kann das Trägerteil in Hauptströmungsrichtung ausgerichtet unterhalb des Flügels angeordnet und mit einer schienenartigen Führungsvorrichtung versehen sein, auf der ein Schlitten, an den die Klappe gekoppelt ist, bewegbar geführt ist.

Dabei kann die Verbindung zwischen Schlitten und Klappe eine starre Verbindung sein und der Schlitten mittels eines Spindelantriebs oder eines Hebelantriebs verstellbar sein.

Die Klappe kann mittels einer Gelenkverbindung, die winklig oder quer zur Hauptströmungsrichtung verläuft, auf dem Wagen gelagert sein. Die Antriebsvorrichtung kann einen Rotary Drive-Antriebsmotor und einen daran gekuppelten Abtriebshebel, der an ein an der Klappe befestigtes Anschlussstück gekuppelt ist, aufweisen.

Bei diesen Alternativen kann die Klappe über eine Hebel-Verstellvorrichtung verstellbar sein.

Weiterhin kann die Hebel-Verstellvorrichtung aufweisen: zwei mit dem Hauptflügel verbundene Anschluss-Stücke, das Trägerteil und ein weiteres Anschluss-Stück, die beide am Hauptflügel angebracht sind, wobei das Trägerteil unterhalb des Anschluss-Stücks angeordnet ist und wobei am oberen Anschluss-Stück mittels eines an diesem angeordneten Drehgelenk ein gelenkig schwenkbarer Hebel und am Trägerteil mittels eines weiteren an diesem angeordneten Drehgelenk ein gelenkig schwenkbarer Hebel jeweils geeigneter Länge angekuppelt ist, wobei der an das obere Anschlussstück gekoppelte Hebel an einem Klappen-Anschlussstück und der an dem Trägerteil gekoppelte Hebel an einem Klappen-Anschlussstück angelenkt ist, die beide an der Klappe angebracht sind.

Am Hauptflügel ist zumindest ein Spoiler bewegbar angekoppelt. Dabei kann eine Bewegungs-Kopplung von Spoiler und Klappe vorgesehen sein. Insbesondere kann die Bewegungs-Kopplung von Spoiler und Klappe mechanisch oder steuerungs- oder regelungstechnisch vorgesehen sein.

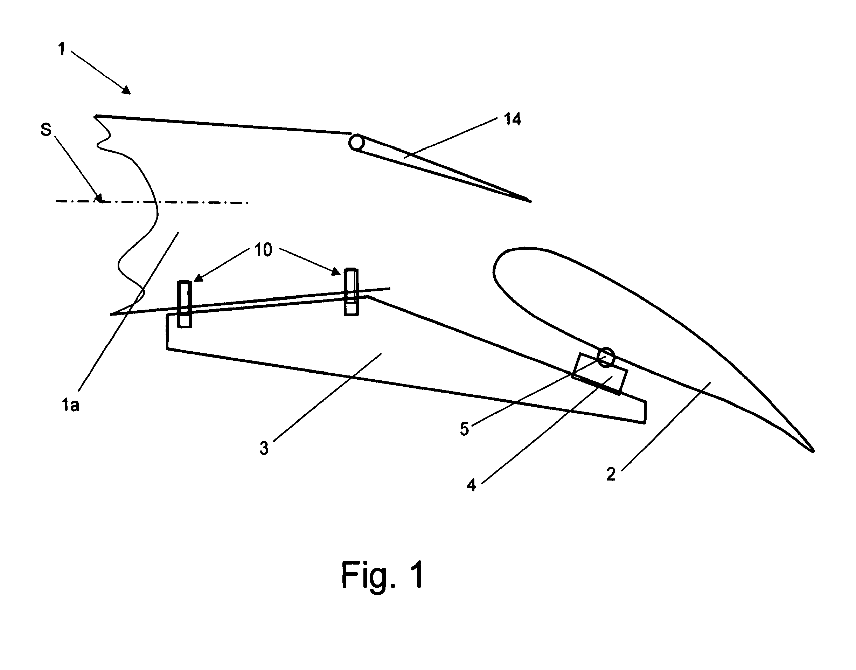

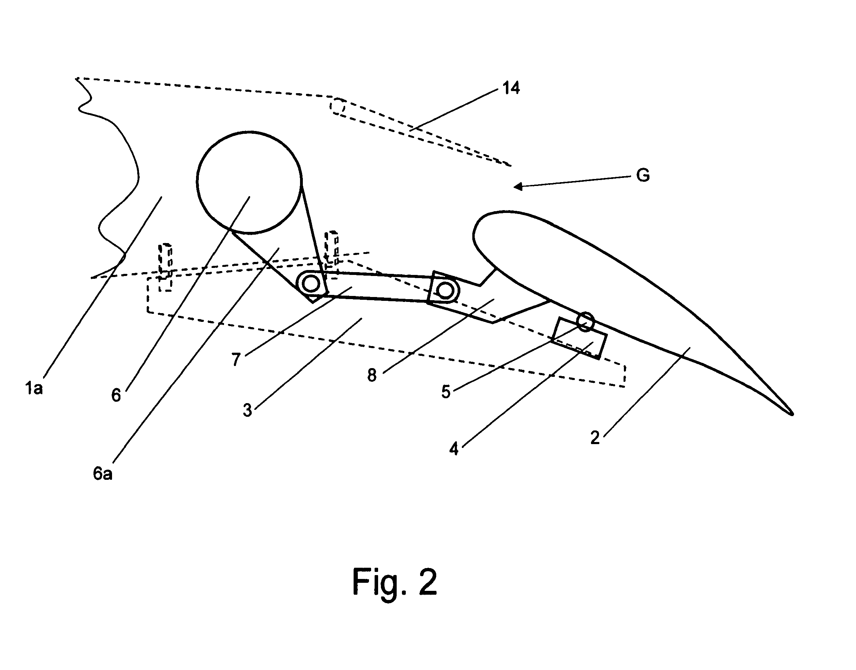

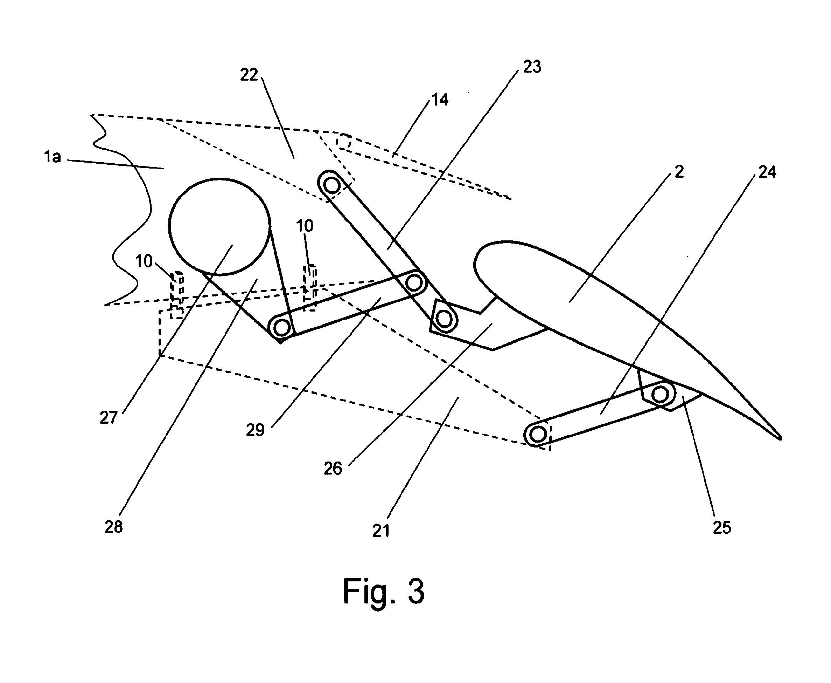

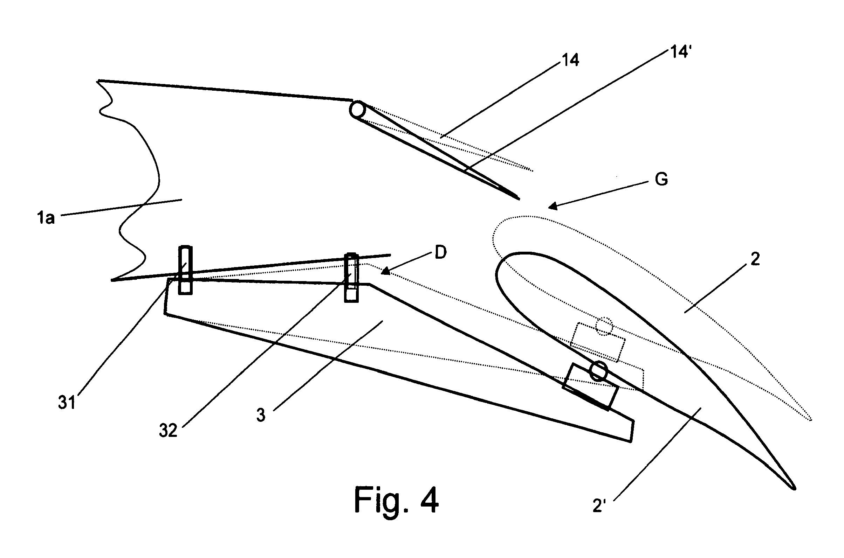

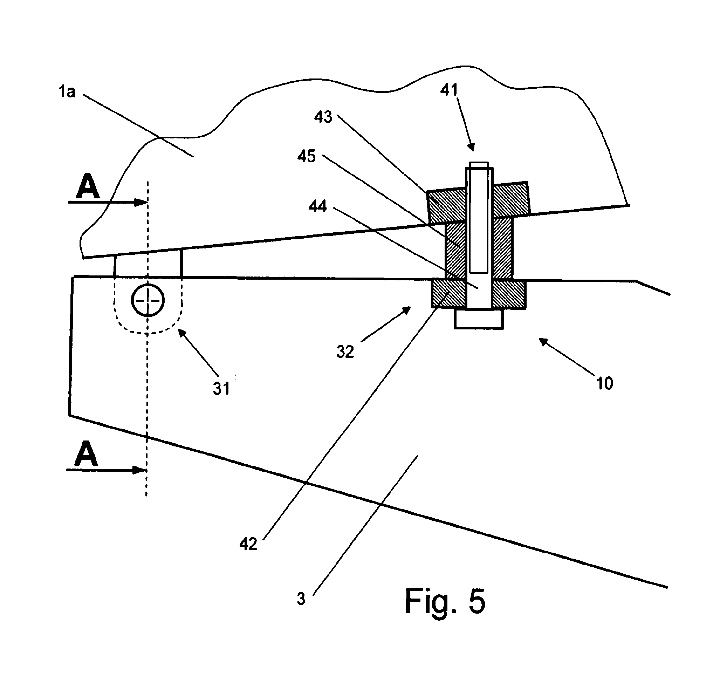

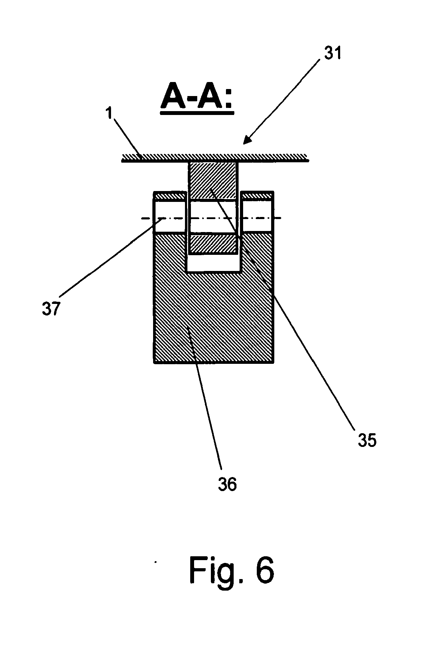

Im Folgenden wird die Erfindung an Hand der beiliegenden Figuren beschrieben, die zeigen:
● Figur 1 eine schematische Seiten-Querschnittsdarstellung eines Hochauftriebssystems für ein Flugzeug mit einer Track-Verstellvorrichtung
● Figur 2 eine schematische Seiten-Querschnittsdarstellung des Hochauftriebssystems der Figur 1 zusätzlich mit einer Antriebsvorrichtung;
● Figur 3 eine schematische Seiten-Querschnittsdarstellung eines Hochauftriebssystems für ein Flugzeug mit einer Bar Linkage-Verstellvorrichtung
● Figur 4 eine schematische Seitenansicht eines Hochauftriebssystems für ein Flugzeug mit der Lagervorrichtung für das Klappen-Trägerteil in zwei verschiedenen Einstellzuständen übereinander dargestellt, wobei ein erster Zustand mit durchgezogenen Linien und ein zweiter Zustand mit gestrichelten Linien dargestellt ist;
● Figur 5 einen vergrößerten Ausschnitt einer Ausführungsform der Lagervorrichtung für das Klappen-Trägerteil in einer schematisierten seitliche Querschnittsdarstellung,
● Figur 6 eine Schnittdarstellung gemäß Schnitt A-A der Figur 5.

Die Figuren 1 bis 3 zeigen ein Hochauftriebssystem, bei welcher die am Hauptflügel 1 des Flugzeuges angeordnete Hochauftriebsklappe 2 schwenkbar gelagert ist, wobei in den Figuren eine ausgefahrene Stellung der Klappe 2 dargestellt ist, die zwischen einer eingefahrenen Stellung, in welcher sie das Flügelprofil im wesentlichen spaltfrei kontinuierlich fortsetzt oder in welcher die Klappe 2 das Flügelprofil ergänzt, und in einer vollständig ausgefahrenen Stellung entsprechend einer Landestellung gelegen ist. In den ausgefahrenen Stellungen bildet sich ein Spalt G gegebener Breite zwischen Hauptflügel 1 und Klappe 2 aus, wobei die Klappe 2 jeweils in einem vorgegebenen Winkel gegen das Flügelprofil angestellt ist.

Die Erfindung bezieht sich insbesondere auf aftriebserzeugende Flächen an Flugzeugen oder Flügel 1 mit einem Flügelkasten la als Teil des Hauptflügels, sowie mit dem Flügel oder Flügelkasten verbundene Auftriebs-steigernde Hinterkantenklappen oder Flaps 2.

Ein mittels einer Lagervorrichtung 10 am Hauptflügel oder Flügelkasten angeordnetes Trägerteil ist vorgesehen, an dem die mit einer Antriebsvorrichtung verstellbare Klappe 2 bei seiner Verstellung geführt ist, wobei die Lagervorrichtung 10 eine Einstell-Vorrichtung aufweist, mit der die Orientierung des Trägerteils einstellbar ist.

Die Verbindung zwischen Hauptflügel oder Flügelkasten und Flaps kann mittels einer Verstellvorrichtung mit Klappen-Betätigungsorganen und einer Antriebsvorrichtung und insbesondere mittels einer Track-Verstellvorrichtung oder mittels einer Hebel-Bar- Verstellvorrichtung oder Linkage-Verstellvorrichtung erfolgen. Beide Verstellvorrichtungen zwischen Flap 2 und Flügel 1 sowie die beschriebenen Antriebseinheiten ermöglichen ein Verfahren oder Verstellen der Flap 2 von einem eingefahrenem Zustand in mehrere Zwischenpositionen mit mittleren Verfahrwegen und Rotationswinkeln sowie in einen vollständig ausgefahrenen Zustand. Generell ist also vorgesehen: ein Hochauftriebssystem für ein Flugzeug aufweisend einen Hauptflügel, eine am Hauptflügel des Flugzeugs angeordnete und gegenüber dem Hauptflügel mittels Klappen-Betätigungsorganen und einer Antriebsvorrichtung zwischen einer eingefahrenen Stellung und mehreren ausgefahrenen Stellungen verstellbare Klappe 2 und ein am Hauptflügel 1 angeordnetes Trägerteil 3, an das die Klappen-Betätigungsorgane gekoppelt sind und gegenüber dem die Klappen-Betätigungsorgane zur Verstellung der Klappe 2 bewegbar sind.

Bei einer Gestaltung der Verstellvorrichtung als Track-Verstellvorrichtung ist ein Trägerteil 3 mit einer schienenartigen Führungsvorrichtung oder einem Track vorgesehen, der im Wesentlichen in Hauptströmungsrichtung ausgerichtet unterhalb des Flügels angeordnet und mit diesem über eine Lagervorrichtung 10 verbunden ist. Auf dem Trägerteil mit der schienenartigen Führungsvorrichtung 3 ist als Klappen-Betätigungsorgan ein Wagen oder Schlitten 4 in der Trägerachsenrichtung des Trägerteils 3 bewegbar gelagert und geführt und ist dabei in den beiden quer zu dieser verlaufenden Richtung gehalten. Auf dem Wagen 4 ist die Flap 2 montiert.

Die Flap 2 ist durch eine Antriebsvorrichtung, der vorzugsweise aus einer am Flügelkasten 1 angeordneten Drehantriebs-Motor 6 oder einer Rotary Drive Unit mit einem Abtriebshebel oder einer Kurbel 6a, einer Antriebsstange oder einer Drive Strut 7 und einem an der Flap 2 befestigten Anschlussstück 8 gebildet. Alternativ kann die Antriebsvorrichtung mit gleicher Antriebsfunktionalität durch einen geeigneten Spindeltrieb realisiert werden (nicht dargestellt), bei dem die Spindel mittels eines Antriebsmotors in Drehung versetzt werden kann und der Wagen 4 an die Mutter des Spindelantriebs gekoppelt ist, so dass der Wagen 4 durch Drehung der Spindel entlang seines Tracks verschoben werden kann.

Die Verbindung zwischen Wagen 4 und Flap 2 kann als starre Verbindung gestaltet sein, so dass die Flap 2 unbeweg relativ zu dem Wagen oder auf dem Wagen 4 montiert ist. Die Lage des Wagens ist mit seiner Position auf der Track festgelegt. Insbesondere bei Verwendung eines Spindelantriebs ist daher keine weitere Fixierung der Flap erforderlich. Alternativ kann die Flap 2 mittels einer Gelenkverbindung mit einer Achse 5, die winklig oder quer zur Hauptströmungsrichtung verläuft, auf dem Wagen gelagert sein, wie es in der Figur 1 dargestellt ist. Bei dieser Ausführungsform wird die Flap 2 in dem Falle, dass die Flap 2 durch eine Antriebsvorrichtung mit einem Rotary Drive-Antriebsmotor, einem mit Abtriebshebel 6 und einem an der Flap 2 befestigten Anschlussstück 8 gebildet ist, durch die Antriebsvorrichtung hinsichtlich ihrer Winkelposition um die Achse 5 gehalten (siehe Figur 2).

Bei der Gestaltung der Verstellvorrichtung als Bar-Linkage-Verstellvorrichtung sind ein am Hauptflügel oder Flügelkasten la angebrachtes Trägerteil 21 sowie als Klappen-Betätigungsorgan ein am Hauptflügel mittels eines Gelenks bewegbar angekuppeltes Anschluss-Stück 22 vorgesehen, wobei das Trägerteil 21 unterhalb des Anschluss-Stücks 22 angeordnet ist. Als weitere Klappen-Betätigungsorgane ist am Anschluss-Stück 22 mittels eines an diesem angeordneten Drehgelenks ein gelenkig schwenkbarer Hebel 23 und am ein weiterer, am Trägerteil 22 mittels eines weiteren an diesem angeordneten Drehgelenks ein gelenkig schwenkbarer Hebel 24 jeweils geeigneter Länge angekuppelt (siehe Figur 3). Der an das obere Anschlussstück gekoppelte Hebel 23 ist an einem Klappen-Anschlussatück 26 und der an dem Trägerteil 21 gekoppelte Hebel 24 ist an einem Klappen-Anschlussstück 25 angelenkt, die beide an der Flap 2 angebracht sind. Die Verstellung der Flap kann mittels den Klappen-Betätigungsorganen über eine Antriebsvorrichtung, mit einer am Flügelkasten la angebrachten Antriebseinheit 27 oder einem Antriebsmotor, der ein Rotary Drive-Antrieb sein kann, mit einem Abtriebshebel 28 und einer am Hebel 23 angelenkten Antriebsstange oder Drive Strut 29 realisiert sein. Alternativ kann der Antrieb des Mechanismus ebenfalls über einen geeigneten Spindeltrieb realisiert werden (nicht dargestellt), wobei die Spindel über einen Antriebsmotor in Drehung versetzt werden kann und die Spindel um ihre Achse drehbar einerseits am Flügelkasten angelenkt ist und andererseits in einer Mutter geführt wird, die am Hebel 23 angebracht ist.

Das Trägerteil 3, 21 ist mittels einer Lagervorrichtung 10 am Hauptflügel angeordnet, die eine Einstell-Vorrichtung aufweist, mit der die Orientierung des Trägerteils einstellbar ist. Mit dieser Lösung kann die Wölbungsfunktion des Flügelprofils bei einem gegebenen Flügel mit Hauptflügel, Klappe und einer Verstellvorrichtung in Abhängigkeit der Verstellung der Klappe aufgrund der flugzeugarchitektonischen Parameter verändert und somit anpassbar gestaltet werden. Unter der Wölbungsfunktion wird in diesem Zusammenhang bei einem insbesondere der Zuwachs an Flügelwölbung durch das Ausfahren der Klappe aufgrund der Betätigung der Verstellvorrichtung mit den Betätigungsorganen zu verstehen. Zum Verändern der Wölbungsfunktion wird die Position der ausgefahrenen Flap und somit insbesondere die Verbindung zwischen Flügel und Flap verändert. Beispielsweise kann zur Vergrößerung der Flügelwölbung die Flap in vertikaler Richtung nach unten verschoben werden.

Dadurch kann insbesondere ein innerhalb einer Flugzeugfamilie oder ein familienkommunales Hochauftriebssystem realisiert werden, mit dem unterschiedlichen Anforderungen der Familienderivate hinsichtlich Flugzeugrumpflänge, Flugzeugmassen, Anfluggeschwindigkeiten etc. nachgekommen werden kann.

Die Einstell-Vorrichtung der Lagervorrichtung 10 des Trägerteils 3, 21 ist zur Einstellung des Abstands einer in etwa in Flügelsehnen-Richtung verlaufenden Referenzlinie des Trägerteils 3, 21 an einer vorbestimmten Stelle derselben von der Flügelsehne des Hauptflügels vorgesehen. Die Referenzlinie kann die obere Seite des Trägerteils 3, 21 oder die Verbindung der Verbindungsstellen des Trägerteils an der dem Hauptflügel zugewandten Seite des Trägerteils. Die Einstell-Vorrichtung weist zumindest eine erste Einstell-Vorrichtung 31 und eine zweite Einstell-Vorrichtung 32 auf, wobei davon ausgegangen wird, dass die erste Einstell-Vorrichtung gegenüber der zweiten Einstell-Vorrichtung 32 stromaufwärts gelegen ist. Dabei weist zumindest eine der Einstell-Vorrichtungen 31, 32 eine Abstands-Einstellvorrichtung 41 auf zur Einstellung des Abstands der oberen Seite des Trägerteils 3, 21 an der Abstands-Einstellvorrichtung 41 von der Flügelsehne des Hauptflügels.

Die Einstellung dieses Abstandes kann für den Betrieb des Flugzeugs fix sein, in welchem Fall dieser Abstand während der Lebensdauer des Flugzeugs nicht verändert werden soll, oder während der Betriebsdauer des Flugzeugs veränderbar sein. Die Erfindung kann auch so ausgeführt sein, dass der Abstand im Einsatz des Flugzeugs veränderbar ist.

Die Einstell-Vorrichtung ist derart ausgebildet, dass die erste Einstell-Vorrichtung 31 ein Gelenk aufweist, und die zweite Einstell-Vorrichtung die Abstands-Einstellvorrichtung 41 aufweist, wie es in der Figur 5 in einer konkreten Ausgestaltung dargestellt ist.

Dabei ist die stromauf von zwei Einstell-Vorrichtungen mit jeweils einer Auflagerstelle gelegene Einstell-Vorrichtung als drehbare, gelenkige Bolzenverbindung, bestehend aus einem flügelseitigen Zapfen 35, der fest mit dem Hauptflügel 1 verbunden sei, sowie einer entsprechend gestalteten Aufnahme-Vorrichtung 36 am Trägerteil 3, 21 und einer die Aufnahme-Vorrichtung und den Zapfen gelenkig verbindenden Achse 37 gestaltet. In der Skizze weist die Aufnahme eine mittige Aussparung zur Aufnahme des Zapfens auf.

Die stromab gelegene Einstell-Vorrichtung 32 kann gebildet sein aus: einer Schraubenverbindung 41 mit einer Trägerteil-seitigen oder trackseitigen Aufnahmevorrichtung 42 und einer Hauptflügel-seitigen oder flügelseitigen Aufnahmevorrichtung 43, einem zur Herstellung einer Schraubverbindung zwischen den Aufnahmevorrichtungen vorgesehenen schraubbaren Verbindungselement 44 (z.B. eine entsprechende Schraube), sowie einem entsprechenden Distanzstück 45.

Die Einstellung oder Justierung des Mechanismus auf die Erfordernisse erfolgt durch die Verwendung eines entsprechenden Distanzstückes 45 von geeigneter Länge.

Dadurch ist das Trägerteil 3, 21 gegebenenfalls mit einem Track durch die geeignete Gestaltung seiner Einstellvorrichtungen in verschiedenen Winkelpositionen am Hauptflügel montierbar, wodurch die vertikale Bewegungskomponente der Flap beeinflussbar ist (siehe Figuren 4 und 5).

Insbesondere kann der Tragflügel des Flugzeugs aus einem Hauptflügel 1 mit einer der vorgenannten Verstellvorrichtungen und einem Trägerteil 3, einer Klappe 2 und einem Spoiler 14 gebildet sein, so dass durch die Erfindung an vorhandenen Flügelkonstruktionen eine geeignete Anpassung des Spoiler-Droop-Winkels vorgenommen, die Profilsehne kontinuierlich gestaltet und die Wirkung der Wölbungsveränderung auf den Hauptflügel stromauf der Flap übertragen werden kann.

Durch die Einstellung der Orientierung des Trägerteils kann die Wölbungsfunktion verändert und somit die aerodynamische Kopplung von Hauptflügel, Spoiler und Klappe verändert werden.

Die Figur 4 zeigt beispiel eine Wölbungsvergrößerung durch eine Verlängerung des Abstandes D aufgrund einer entsprechenden Verstellung des Trägerteils 3 bei jeweils gleicher Klappenstellung, wodurch die vertikale Komponente des möglichen Verfahrweges der Klappe 2 vergrößert wird. Die Wölbungsfunktion für den Gesamtflügel wird durch die Verstellung des Trägerteils 3 derart verändert, dass bei teilweiser sowie vollständig ausgefahrener Flap 2' die Profilwölbung vergrößert wird.

Somit kann mit bei einer vorhandenen Anordnung aus Hauptflügel und Klappe und mit derselben Verstellvorrichtung und zugehörigen Betätigungsorganen die Wölbungseigenschaft des Hauptflügels bei Verstellung der Klappe insbesondere im Hinblick auf eine kontinuierliche Gestaltung der Profilsehne und, bei Vorhandensein eines Spoilers, das Spaltmaß zwischen Hauptflügel und Flap durch einen größeren Spoiler-Droop-Winkel geeignet eingestellt werden. In der Darstellung der Figur 4 ist dargestellt, dass in einem ausgefahrenen Zustand 2' der Klappe der spoiler aus einer Referenz- oder Neutral-Stellung nach unten in eine Stellung 14' gefahren wird, um den Spalt G auf einem vorbestimmten Spaltmaß zu halten und z.B. das Spaltmaß in einem vorbestimmten Verstellbereich der Klappe 2 weitgehend konstant zu halten. Dadurch kann insbesondere die Größe und Gestalt des Spaltes zwischen Flügel und Klappe zur energetischen Anreicherung der Oberseiten-Grenzschicht, einer Vergrößerung der Flügelfläche und eine Vergrößerung der Flügelwölbung erreicht werden. Durch die Veränderung der Orientierung des Trägerteils mittels der Einstell-Vorrichtung können bei einem vorhandenen Flügel auch die aerodynamischen Eigenschaften des Gesamtflügels bei verschiedenen Verstellzuständen der Klappe und gegebenenfalls auch des Spoilers optimiert werden.

Bei Vorhandensein eines Spoilers oder generell einer stromauf der Klappe gelegenen weiteren Klappe kann ein geeignetes Spaltmaß zwischen Klappe 2 und Spoiler 14 und somit eine erhöhte wirksame Flügelwölbung für jeden Verstellzustand der Klappe in Verbindung mit einem zugehörigen Verstellzustand des Spoilers erreicht werden. Dazu ist eine Bewegungs-Kopplung von Spoiler und Klappe vorgesehen, die durch eine entsprechende Verstell-Mechanik bzw. Kinematik mechanisch oder steuerungs- oder regelungstechnisch vorgesehen sein kann.

Bei einer mechanischen Kopplung zwischen Klappe und Spoiler kann eine Kopplung von Klappe und Spoiler mit einer geeigneten Übersetzung zwischen der Anordnung aus Klappe/Klappen-Kinematik/Klappen-Antrieb und der Anordnung aus Spoiler/Spoiler-Gelenk/Spoilerantrieb vorgesehen sein.

Bei der steuerungs- oder regelungstechnischen Realisierung kann an der Klappe eine entsprechende Sensor-Vorrichtung vorgesehen sein, die die jeweilige Position der Klappe erfasst. Eine Steuerungs- oder Regelungs-Vorrichtung steht mit der Sensor-Vorrichtung funktional in Verbindung, die die Positionswerte der Klappe von der Sensor-Einrichtung empfängt. Bei dem Vorhandensein einer Steuerungs-Vorrichtung werden aufgrund der aktuellen Positionswerte der Klappe aufgrund einer in der Steuerungs-Vorrichtung implementierten Tabelle Kommandosignale für eine Antriebsvorrichtung zur Verstellung des Spoilers ermittelt, aufgrund denen der Spoiler in Abhängigkeit des jeweiligen Klappen-Verstellzustands verstellt wird. Bei dem Vorhandensein einer Regelungs-Vorrichtung werden aufgrund der aktuellen Positionswerte der Klappe aufgrund einer in der Regelungs-Vorrichtung implementierten Regelungsfunktion Kommandosignale für eine Antriebsvorrichtung zur Verstellung des Spoilers ermittelt, aufgrund denen der Spoiler in Abhängigkeit des jeweiligen Klappen-Verstellzustands verstellt wird.

Auf diese Weise ist gleichzeitig Flächenvergrößerung und eine Wölbungssteigerung realisierbar. Damit einhergehend ergibt sich bei unveränderten Flügel-Vorderkante ein gesteigerter effektiver Flügel-Einstellwinkel, d.h. der Winkel zwischen der Flügelprofilsehne und Flugzeuglängsachse. Dadurch können Limitierungen bei Start und Landung durch Rotationsfreiwinkel durch verstärkten Auftrieb bei geringen Rotationswinkel kompensiert werden.

Durch den Spoiler-Droop, der durch die erfindungsgemäße Lösung für verschiedene Bedingungen und/oder Bauarten eines Flügels einstellbar ist, kann der Widerstand, den die Hochauftriebskonfiguration erzeugt, kontrolliert werden. Auf diese Weise kann für das Flugzeug eine erhöhte Flexibilität hinsichtlich untypische Anflugverfahren, wie z.B. Lärmemissions-motivierte Steilanflugverfahren (Steep Approach) erreicht werden.

## Patentansprüche

1. Verfahren zur Änderung der Wölbung eines Tragflügels, aufweisend einen Hauptflügel (1) mit einem mittels einer Lagervorrichtung (10) an diesem befestigten Trägerteil (3; 21), das sich in einer ersten Winkellage gegenüber dem Hauptflügel (1) befindet, einen an dem Hauptflügel (1) bewegbar angekoppelten Spoiler (14) und eine Hochauftriebskiappe (2), die mittels Klappen-Betätigungsorganen bewegbar an das Trägertell (3; 21) gekoppelt ist, wobei der Spoiler bei einem vorbestimmten Verstellzustand der Hochauftriebsklappe (2) relativ zum Trägerteil einen ersten Spoiler-Droop-Winkel unter Freigabe eines Spalts (G) mit einem vorbestimmten Spaltmaß zwischen dem Spoiler (14) und der Hochauftriebsklappe (2) mit einer ersten Spaitgröße einnimmt,
wobei die Lagervorrichtung (10) eine durch erste gelenkige Einstell-Vorrichtung (31) und eine zweite stromab der ersten Einstell-Vorrichtung gelegene Einstell-Vorrichtung (32) am Hauptflügel (1) befestigt ist, wobei die zweite Einstell-Vorrichtung (32) eine die AbstandsEinstellvorrichtung (41) aufweist,
wobei Verfahren die folgenden Schritte aufweist:
Änderung der Orientierung des Trägerteils (3; 21) relativ zum Hauptfl-gel (1) durch Befestigung des Trägerteils (3; 21) mittels Husiten Einstell-Vorrichtung (32) der Lagervorrichtung derart, dass das Trägerteil (3; 21) eine zweite Winkellage relativ zum Hauptflügel (1) einnimmt, wobei die Änderung der Orientierung des Trägerteils (3; 21) durch Auswechslung eines ersten Distanzstücks durch ein zweites Distanzstück erfolgt, wobei das jeweilige Distanzstück Teil der Abstands-Einstellvorrichtung (41) ist, die eine Schraubenverbindung aufweist mit einer trägerteil-seitigen Aufnahmevorrichtung (42) und einer hauptflügel-seitigen Aufnahmevorrichtung (43), einem Verbindungselement (44) zum Verbinden der Aufnahmevorrichtungen (41, 42) sowie dem auf das Verbindungselement (44) aufgesetzte Distanzstück (45). wobei die Länge des zweiten Distanzstücks sich von der Länge des ersten Distanzstücks derart unterscheidet, dass der Einsatz des zweites Distanzstücks die Orientierung des Trägertells (3; 21) entsprechend der angestrebten Wölbungsänderung des Tragflügels verändert,
Ausfahren der Horhaufttiebsklappe (2) in den vorbestimmten Verstellzustand der Hochauftriebsklappe (2) relativ zum Trägerteil und Veränderung des Spoiler-Droop-Winkels derart, dass der Spoiler (14) einen zweiten Spoiler-Droop-Winkel unter Freigabe eines Spalts (G) zwischen dem Spoiler (14) und der Hochauftriebsklappe (2) mit dem vorbestimmten Spaltmaß einnimmt.

2. Verfahren nach dem Anspruch 1,
wobei der Spoiler (14) bei verschiedenen Verstellzuständen innerhalb eines vorbestimmten Verstellbereichs der Hochauftriebskläppe (2) jeweils einen Spoiler Droop-Winke! einnimmt, bei denen der Spoiler (14) einen Spalt (G) jeweils mit einer vorbestimmten konstanten Spaltgröße zwischen dem Spoiler (14) und der Hochauftriebsklappe (2) freigibt.

## Claims

1. Method for varying the camber of an airfoil comprising a main wing (1) having a support member (3; 21) which is mounted onto it by means of a bearing device (10), the support member being arranged in a first angular position relative to the main wing (1), and comprising a spoiler (14) which is movably coupled onto the main wing (1) and a high-lift flap (2) being movably coupled onto the support member (3; 21) by means of a flap actuation device, wherein the spoiler at a predetermined displacement state of the high-lift flap (2) relative to the support member assumes a first spoiler droop angle by opening a gap (G) having a predetermined gap dimension between the spoiler (14) and the high-lift flap (2) having a first gap size,
wherein the bearing device (10) is mounted onto the main wing (1) by a first articulated adjusting device (31) and a second adjusting device (32) positioned downwards of the first adjusting device, wherein the second adjusting device (32) comprises a distance adjusting device (41),
wherein the method comprises the following steps:
varying the orientation of the support member (3; 21) relative to the main wing (1) by mounting of the support member (3; 21) by means of the second adjusting device (32) of the bearing device to such an extent that the support member (3; 21) assumes a second angular position relative to the main wing (1), wherein the varying of the orientation of the support member (3; 21) results from substituting a first spacer with a second spacer, wherein the respective spacer is a component of the distance adjusting device (41), which comprises a screw connection having a receiving device (42) on the side of the support member and a receiving device (43) on the side of the main wing, a connecting element (44) for connecting the receiving devices (41, 42) as well as the spacer (45) disposed on the connecting element (44), wherein the length of the second spacer differs from the length of the first spacer to such an extent that using the second spacer varies the orientation of the support member (3; 21) corresponding to the desired camber variation of the airfoil,
extending the high-lift flap (2) into the predetermined displacement state of the high-lift flap (2) relative to the support member and varying of the spoiler-droop-angle to such an extent that the spoiler (14) reaches a second spoiler droop angle by revealing a gap (G) between the spoiler (14) and the high-lift flap (2) having the predetermined gap dimension.

2. Method according to claim 1,
wherein the spoiler (14) reaches a spoiler droop angle each, at which the spoiler (14) opens a gap (G) between the spoiler (14) and the high-lift flap (2) each having a predetermined continuous gap size at different displacement states within a predetermined adjusting range of the high-lift flap (2).

## Revendications

1. Procédé destiné à modifier la courbure d'une aile porteuse, présentant une aile principale (1) avec une partie porteuse (3 ; 21) fixée sur celle-ci via un dispositif de palier (10), qui se trouve dans une première position angulaire par rapport à l'aile principale (1), un déflecteur (14) couplé de manière mobile sur l'aile principale (1) et un volet hypersustentateur (2) qui est couplé sur la partie porteuse (3 ; 21) en étant mobile via des organes d'actionnement de volet, sachant que le déflecteur adopte un premier angle d'abaissement de déflecteur lors d'un état de réglage prédéfini du volet hypersustentateur (2) par rapport à la partie porteuse, en libérant une fente (G) présentant une dimension de fente prédéfinie entre le déflecteur (14) et le volet hypersustentateur (2) avec une première taille de fente,
sachant que le dispositif de palier (10) est fixé sur l'aile principale (1) par un premier dispositif de réglage (31) articulé et un deuxième dispositif de réglage (32) en aval du premier dispositif de réglage, sachant que le deuxième dispositif de réglage (32) présente un dispositif de réglage d'écartement (41),
sachant que le procédé présente les étapes suivantes :
modification de l'orientation de la partie porteuse (3 ; 21) par rapport à l'aile principale (1) par fixation de la partie porteuse (3 ; 21) via le deuxième dispositif de réglage (32) du dispositif de palier, de telle sorte que la partie porteuse (3 ; 21) adopte une deuxième position angulaire par rapport à l'aile principale (1), sachant que la modification de l'orientation de la partie porteuse (3 ; 21) s'effectue par remplacement d'une première pièce d'écartement par une deuxième pièce d'écartement, sachant que la pièce d'écartement respective fait partie du dispositif de réglage d'écartement (41) qui présente une liaison vissée avec un dispositif de réception (42) côté partie porteuse et un dispositif de réception (43) côté aile principale, un élément de liaison (44) pour relier les dispositifs de réception (41, 42) ainsi que la pièce d'écartement (45) placée sur l'élément de liaison (44), sachant que la longueur de la deuxième pièce d'écartement se différencie de la longueur de la première pièce d'écartement en ce que l'emploi de la deuxième pièce d'écartement modifie l'orientation de la partie porteuse (3 ; 21) conformément à la modification de courbure voulue de l'aile porteuse,
sortie du volet hypersustentateur (2) dans l'état de réglage prédéfini du volet hypersustentateur (2) par rapport à la partie porteuse et modification de l'angle d'abaissement de déflecteur de telle sorte que le déflecteur (14) adopte un deuxième angle d'abaissement de déflecteur en libérant une fente (G) entre le déflecteur (14) et le volet hypersustentateur (2) avec la dimension de fente prédéfinie.

2. Procédé selon la revendication 1, dans lequel le déflecteur (14), à différents états de réglage dans une plage de réglage prédéfinie du volet hypersustentateur (2), adopte respectivement un angle d'abaissement de déflecteur, lors desquels le déflecteur (14) libère une fente (G) respectivement avec une taille de fente constante prédéfinie entre le déflecteur (14) et le volet hypersustentateur (2).
